# EUROPEAN PATENT APPLICATION

(11) **EP 4 804 467 A1**
(43) Date of publication of application: **09.09.2026**
(21) Application number: 26162773.1
(22) Date of filing: 06.03.2026
(51) Int. Cl.: H04L 12/40, H04L 61/5038, H04L 61/5092, H04L 61/5046, H04L 41/0853

(54) **ENUMERATION METHOD FOR AUTOMATICALLY DETERMINING AN OBJECT IDENTIFIER OF A FIRST NETWORK NODE OF A CAN BUS HAVING SEVERAL NETWORK NODES**

(30) Priority: 07.03.2025 DE 102025108828
(71) Applicant: sonnen GmbH, 87499 Wildpoldsried (DE)
(72) Inventor: Guenther, Stefan, 95032 Hof (DE); Campestrini, Christian, 87648 Aitrang (DE)

(57) **Abstract**

The invention relates to an enumeration method for automatically determining an object identifier (36) of a first network node (8) of a CAN bus having several network nodes (4), wherein the method is performed by the first network node (8) and includes:
receiving an initialization message containing an enumeration call via the CAN bus;
sending an enumeration message via the CAN bus in response to the initialization message, wherein the enumeration message specifies a first identifier (19) bijectively assigned to the first network node (8) among all network nodes (4) of the CAN bus;
receiving a respective enumeration message from at least one second network node (9) of the CAN bus, which specifies a respective second identifier (31) as an object identifier (36) uniquely assigned to the respective second network node (9) among all network nodes (4) of the CAN bus;
sorting (32) the set of identifiers, which contains the first identifier (19) and all second identifiers (31) received by the first network node (8) since receiving the initialization message, according to a predetermined sorting criterion to obtain an order of the identifiers in the set; and
determining an object identifier (36) of the first network node (8) in a one-to-one dependency on the position (34) of the first identifier (19) in the order. Furthermore, a network node for carrying out the enumeration method and a communication network with a plurality of such network nodes are described.

## Description

The present invention relates to an enumeration method for automatically determining an object identifier of a first network node of a CAN bus having several network nodes, such a (first) network node, and a communication network with such a CAN bus with a plurality of network nodes connected thereto.

The so-called Controller Area Network bus (CAN bus) is a well-known vehicle network standard in the automotive industry. As a serial bus system, it enables communication between different network nodes, such as control units and sensors or other devices, in a vehicle. CAN is internationally standardized under ISO 11898-1 (CAN bus protocol).

An object identifier (also known as an "identifier") in a CAN bus is a unique code used to identify a specific message or object, such as a network node, in the network. In the CAN bus protocol, each object identifier consists of 11 or 29 bits (depending on the CAN bus type), which are transmitted in the message header. This object identifier serves as a unique key to identify the message or the object that contains the message. The object identifier can contain various pieces of information, such as: the source of the message (e.g., a specific device or module), the type of message (e.g., a control message or a status message), a priority of the message, and/or the address of the recipient. When the object identifier identifies a device, it is sometimes alternatively referred to as the "node ID."

The object identifier is used by the CAN bus network nodes to filter and process the messages. Each network node can be configured to receive and process only specific messages with specific object identifiers. Overall, the object identifier serves as an important component of the CAN bus protocol to enable communication between the devices in the network and to ensure that the correct messages reach the correct recipients. The CAN bus protocol is currently available, particularly in version 2.0, and is referred to below as "CAN bus protocol 2.0." The CAN bus protocol 2.0 defines two different object identifier formats, namely an 11-bit identifier, also called "base frame format" (CAN 2.0A), and a 29-bit identifier, also called "extended frame format" (CAN 2.0B). According to the CAN bus protocol, an implementation must accept the "base frame format," while it may optionally accept the "extended frame format," but must at least tolerate it.

In the CAN bus context, the term "enumeration" refers to a process in which a device (e.g., a control unit or a sensor) receives its unique object identifier (node[ID) within a CAN network. When a new device is connected to a CAN network, it must first register in order to become part of the network as a new network node. This is done through the enumeration process in which the device informs the network that it wants to register. Known enumeration processes generally work as follows: The new device sends a registration message (also called an "enumeration request") to the network. The bus master (or another control unit) receives this message and checks whether the new device is already registered. If the new device is not registered, the bus master assigns the device an object identifier that is unique at least for the CAN bus under consideration. The network node then confirms the assignment of the object identifier by sending a reply message.

In known solutions, defining an object identifier for a given network node can be done as a basis or within the framework of enumeration, particularly by means of manual configuration, for example via local switches on the network node, or by serially addressing the network nodes via a migrating token.

After successful enumeration, the device can participate in the CAN network and send and receive messages. The enumeration process ensures that each device in the network has a unique identification number (object identifier), which facilitates communication between devices and avoids errors. It should be noted that the enumeration process may vary depending on the CAN network and device type. Some networks may also use a static assignment of object identifiers (especially node IDs) instead of performing a dynamic enumeration.

It is an object of the present invention to improve enumeration in CAN bus systems, in particular to automate it in an efficient manner.

To achieve the object, the respective devices or methods are proposed in accordance with the teaching of the independent claims. Various embodiments and further developments are the subject matter of the dependent claims.

Some of the terms used to describe the solution are explained in more detail below:
The term "network node" (also referred to as "node"), as used herein, with regard to a CAN bus, means a device or component that is connected to the network (i.e., the CAN bus) and sends or receives data, or is at least equipped to do so. Each network node in the CAN bus has a unique address assigned thereto as an object identifier (node ID), which distinguishes it from other nodes. This address is used to send data packets to the correct recipient. A network node can be any device, such as a control unit, a sensor, an actuator, a display, or an input device. In particular, a network node for use within the present solution can also be a battery module or another component of a battery system.

The term "initialization message," as used herein, refers in particular to a message sent via the CAN bus that requests at least one, and in particular all, network nodes to send an enumeration message via the CAN bus (enumeration call). In particular, an initialization message can be executed as a so-called "remote request" in accordance with the CAN protocol.

The term "enumeration message," as used herein, refers to a message sent or to be sent by a network node via the CAN bus in response to an initialization message, by which the network node sends information that identifies it.

As possibly used herein, the terms "comprises," "contains," "includes," "is provided with," "has," "with," or any other variant thereof are intended to cover non-exclusive inclusion. For example, a method or a device that comprises or has a list of elements is not necessarily restricted to these elements, but may include other elements that are not expressly listed or that are inherent to such a method or device.

Furthermore, unless expressly stated to the contrary, "or" refers to an inclusive or and not to an exclusive "or." For example, a condition A or B is met by one of the following conditions: A is true (or present) and B is false (or absent), A is false (or absent) and B is true (or present), and both A and B are true (or present).

The terms "a" or "an," as possibly used herein, are defined in the meaning of "one or more." The terms "another" and "a further" and any other variant thereof are to be understood to mean "at least another."

The term "plurality," as possibly used herein, is to be understood to mean "two or more."

The terms "first," "second," "third," and similar terms in the description and claims are used to distinguish between similar or otherwise equally named elements and are not necessarily descriptive of a sequential, spatial, or chronological order. It should be understood that the terms so used are interchangeable under appropriate circumstances, and that the embodiments of the solution described herein may also work in different orders than those described or illustrated herein.

The term "configured" or "designed" to perform a specific function (and respective modifications thereof), as possibly used herein, is to be understood to mean that the corresponding device or a component thereof is already provided in a design or setting in which it may execute the function or that it is at least adjustable, i.e., configurable, so that it can execute the function after corresponding adjustment. The configuration can take place, for example, via a corresponding setting of parameters of a process sequence or of switches or the like for activating or deactivating functionalities or settings. In particular, the device can have several predetermined configurations or operating modes, so that the configuration can be carried out by selecting one of these configurations or operating modes.

A first aspect of the solution presented here concerns an enumeration method for automatically determining an object identifier of a first network node of a CAN bus having several network nodes (in particular a CAN bus that implements the CAN bus protocol according to its version 2.0 or possibly higher, at least in its mandatory requirements). The procedure is executed by the first network node and includes:
(i) receiving an initialization message containing an enumeration call via the CAN bus;
(ii) sending an enumeration message via the CAN bus in response to the initialization message, wherein the enumeration message specifies a first identifier bijectively assigned to the first network node among all network nodes of the CAN bus;
(iii) receiving a respective enumeration message from at least one second network node of the CAN bus, which specifies a respective second identifier bijectively assigned to the respective second network node among all network nodes of the CAN bus;
(iv) sorting the set of identifiers, which contains the first identifier and all second identifiers received by the first network node since receiving the initialization message, according to a predetermined sorting criterion to obtain an order of the identifiers in the set; and
(v) determining an object identifier of the first network node in a one-to-one dependency on the position of the first identifier in the order of the identifiers.

In this method, the initialization message can be sent in particular by a bus controller of the CAN bus, for example as a broadcast message to all network nodes connected to the bus. The sender of the initialization message therefore does not need to be informed in advance about the type, number, and addresses of the network nodes (bus participants).

The first and second identifiers can be defined or assigned in the network nodes themselves, for example as immutably assigned serial numbers of the devices or modules acting as network nodes. Such serial numbers could, for example, be written into non-volatile memory during the production of the network nodes, or be defined physically, for example via switches or unchanging physical, readable properties, such as within a hard-wired circuit.

Within the framework of the enumeration method, due to the serial nature of the CAN bus, each (first) network node can thus receive the respective identifier of all other (second) network nodes and order the set of identifiers, including its own identifier, in an order, in particular sort them, for example according to a numerical value of the identifiers. The position of the first network node's own unique identifier, which is known to it per se, can then be used to derive an object identifier bijectively assigned to it. In the simplest case, this can be defined as the number of the position of one's own identifier in the order, if the positions are numbered according to their order. However, it is also possible that the object identifier is defined as the value of a bijective function of position that differs from the unit function, for example by multiplying the position by a factor that is the same for all network nodes or by adding a summand that is the same for all network nodes. Each network node acts as the "first" network node with regard to determining its own object identifier, while it acts as the "second" network node with regard to determining the respective object identifiers of the other network nodes.

The enumeration method is therefore also applicable to a large number of bus participants or network nodes, for example to a double-digit number of network nodes, where manual enumeration, such as during the commissioning of network nodes or during their installation and connection to the CAN bus, would be very time-consuming. Furthermore, the network nodes to be enumerated do not need to be known in advance to the other bus participants and, if applicable, a bus controller, so that plug & play capability in this sense can also be supported. Since the network nodes can perform their respective enumerations simultaneously, short overall enumeration times for the CAN bus can be achieved, for example in the range of one second or less.

Preferred exemplary embodiments are described hereinafter, which in each case, unless expressly excluded or technically impossible, can be combined as desired with one another and with other aspects of the present solution, which will be described in the following.

In some embodiments, the first network node repeatedly sends the enumeration message via the CAN bus in response to the received initialization message. In particular, a specific period of time can be defined from receiving the initialization message, for example one second, within which the repetitions take place before they end at the end of the period. The repetitions have the advantage that larger bus systems with many bus participants can be reliably enumerated more easily, since the probability that each (first) bus participant (network node) receives the enumeration message of all other connected (second) network nodes at least once can be increased.

In some embodiments, the first network node randomly determines a value of a delay variable and, in response to the received initialization message, sends the enumeration message for the first time at or after the expiry of a time period determined by the value of the delay variable since receiving the initialization message via the CAN bus. The value of the delay variable can be generated, for example, using a random number generator in the (first) network node. Overall, considering the entire CAN bus, the random delay ensures that the enumeration messages of the various network nodes are sent in a time-stretched distribution in response to the initialization message, thus keeping the probability of bus overload, especially an overflow of the respective receive buffers of the network nodes, low even with a high number of network nodes on the CAN bus. To ensure that only one network node is authorized to transmit at any given time, the arbitration procedure specified in the CAN bus protocol can be used.

In some embodiments, the network identifiers of the network nodes represent numeric or alphanumeric values, and the sorting of the set of object identifiers according to the sorting criterion is performed such that the object identifiers of the set are sorted in ascending or descending order according to their numeric or alphanumeric values. This allows for a particularly simple implementation since such sorting can be easily managed with fast algorithms of short code length.

In some embodiments, the enumeration message of the first network node is generated such that its payload contains a predetermined message identifier indicating that the message is an enumeration message. The message identifier can, in particular, contain a predetermined number that can be read from the enumeration message by a receiver (another network node) and by which the receiver can recognize that it is an enumeration message. If the message can also be identified as an enumeration message based on other characteristics, the message identifier can serve as redundancy to further increase the probability of a reliable and correct identification of the message as an "enumeration message" type.

In some of these embodiments, each enumeration message from a second network node received at the first network node is checked by the first network node to see if it contains the predetermined message identifier in its payload. A second identifier that may be contained in the respective received enumeration message will only be used to determine the object identifier of the first network node if a match is found during the verification process. As explained above, this also serves to further increase the probability of reliably and correctly recognizing the message as an "enumeration message" type. The principle can therefore be applied to all network nodes to improve the recognition of the enumeration messages of the respective other network nodes, specifically in the case of a high message density on the CAN bus, for example for a large number of network nodes.

In some embodiments, the first network identifier is encoded in 29 bits and each enumeration message is formatted in extended CAN format according to the CAN bus protocol (version 2.0 or higher) and sent via the CAN bus. This allows the address space defined by the extended frame format, which is based on a 29-bit identifier, to be used for enumeration, while the address space defined by the base frame format, which is thus based on an 11-bit identifier and is disjoint therefrom, can be used for enumeration. Thus, enumeration messages can be easily distinguished from data messages based on their format, especially the identifier length, and collisions can be avoided.

In some embodiments, each received enumeration message from a second network node is read according to the extended CAN format according to the CAN bus protocol in order to extract the associated second object identifier. This corresponds to the opposite direction, where the first network node is the recipient of enumeration messages that are formatted in the same way as those it sends itself. This allows a uniform format, namely the extended frame format, to be used for all enumeration messages from network nodes on the CAN bus, which can be used for a CAN bus implementation with high enumeration efficiency and low implementation complexity for the automation of enumeration.

In some embodiments, the reception of enumeration messages from second network nodes is limited to a predetermined period (enumeration period) from receiving the initialization message. Thus, a fixed period is defined within which enumeration messages can and must be received in order to be considered within the enumeration method. If the initialization message is sent as a broadcast message and thus simultaneously to all network nodes, for example by a bus controller of the CAN bus, the enumeration periods of the different network nodes overlap at least largely (the reception times for a successful reception of the initialization message can still vary to a certain extent from network node to network node), so that overall the enumeration period also roughly defines a time span for the entire CAN bus within which the enumeration takes place and is completed. The time a network node needs to determine its own object identifier according to the established procedure after receiving all enumeration messages from the other network nodes will typically be shorter (or may be shorter) than the enumeration period and therefore will not be significant in comparison to it, or may even be negligible, so that the aforementioned time span then essentially depends on the enumeration period.

In some embodiments, the enumeration method is performed with respect to a first network node and second network nodes, each of which has a battery module. The battery module can, in particular, be a battery module that serves as an energy storage component of a photovoltaic system or is configured as such. Thus, the method can be used specifically (also) for the automatic enumeration of battery modules of an electrochemical energy storage system, in particular a battery system for a photovoltaic system. Since the enumeration method does not require prior knowledge of the number and type of network nodes at the other network nodes and possibly a bus controller, it is particularly suitable for reliably enumerating battery systems where, "in the field" (i.e., in a battery system that is already operational), battery modules can be variably coupled to or decoupled from the CAN bus, whether for repair or maintenance purposes or to change the operational storage capacity of the battery system.

A second aspect of the present solution relates to a network node configured as a network node for a CAN bus, comprising: (i) a communication interface for sending and receiving messages via the CAN bus; and (ii) a data processing device configured to perform the enumeration method according to the first aspect.

The data processing device may in particular include a controller, such as a microcontroller, with an associated program memory, wherein a computer program may be stored in the program memory which is configured to control the network node according to the enumeration method. Alternatively, the network node can also be configured to access a corresponding computer program available externally, for example on one or more servers or other data processing units, via a communication connection, for at least partial implementation of the enumeration method, in particular in order to exchange data with the computer program, which data are used during the execution of the method or computer program or represent outputs of the computer program.

In some embodiments, the network node includes a battery module.

A third aspect of the present solution relates to a communication network. It comprises: (i) a CAN bus, in particular according to the CAN protocol according to version 2.0 or higher, and (ii) a plurality of network nodes connected thereto via their respective communication interfaces according to the second aspect, wherein the respective data processing device of each of the network nodes is configured to perform the enumeration method according to the first aspect.

In some embodiments, the communication network includes a network control unit configured to send the initialization message as a broadcast message via the CAN bus to all network nodes connected thereto.

The explanations given with respect to the first aspect of the solution also apply correspondingly to the further aspects of the solution.

Further advantages, features, and possible applications of the present invention result from the following more detailed description in conjunction with the figures.

In the figures:
- **Fig. 1**: shows a battery system according to an exemplary embodiment, in which a bus controller and a plurality of battery modules are connected to each other via a CAN bus for exchanging messages and thus form a communication network;
- **Fig. 2**: shows in part a flowchart (section (a)) to illustrate an enumeration method according to an exemplary embodiment;
- **Fig. 3**: shows further sections (b) and (c) of the enumeration method from Fig. 2;
- **Fig. 4**: shows a frame structure of an enumeration message according to an exemplary embodiment; and
- **Fig. 5**: shows a simple example of an exemplary list generated by a first network node with its own (first) identifier and several second identifiers received via enumeration messages, before and after sorting.

In the figures, the same reference numerals denote the same, similar or corresponding elements. Elements depicted in the figures are not necessarily represented to scale.

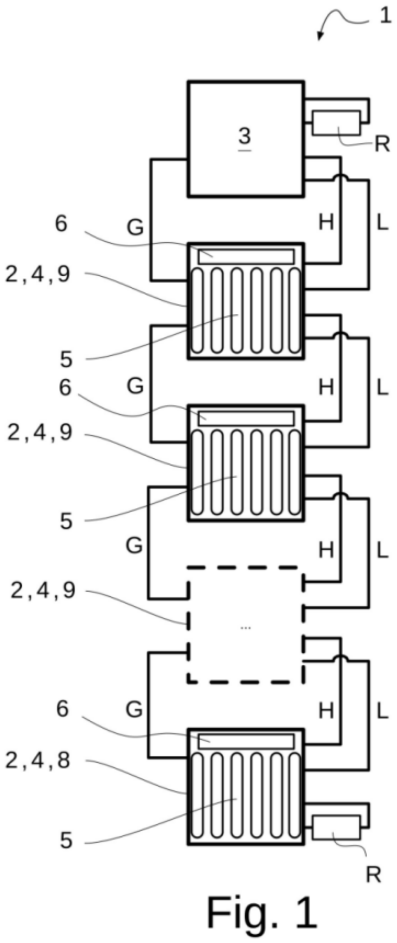

**Fig. 1** shows an exemplary battery system 1 in which a plurality of battery modules 2 and a bus controller 3 are each interconnected as network nodes 4 via a CAN bus. The battery system 1 thus comprises a communication network formed by the CAN bus and the network nodes 4.

Each of the battery modules 2 has a plurality of battery cells 5 as well as a module management unit 6 for controlling and monitoring the battery module 2. The communication network is set up to exchange messages between the network nodes 4 in accordance with the CAN bus protocol, in particular version 2.0 or higher, if applicable. The network nodes 4 are connected sequentially, with terminating resistors R provided at each of the two end sides of the sequence, typically having a value of 120 ohms. The bus controller 3 serves as the master of the CAN bus and is specifically designed to initiate an enumeration of the network nodes 4 by transmitting an initialization message, specifically as a broadcast message, via the CAN bus to all network nodes 4.

Accordingly, the battery modules 2 each form so-called "slave" nodes of the CAN bus or the communication network. The network nodes 4 that are adjacent to each other in the sequence are each connected via a wired data connection and via a ground line G. The wired data connection (co-)implements the CAN bus and has a CAN high line H and a CAN low line L for signal transmission. Additionally, connections for shielding the lines, specifically the lines for signal transmission, may be present (not shown in Fig. 1). The number of battery modules 2 can vary over time, i.e., the enumeration can be successfully executed not only when the battery system 1 is initialized for the first time and the type and number of network nodes 4 are known in advance, but specifically also when additional battery modules 2 are added to or removed from an already installed battery system 1 as network nodes 4. The enumeration method 7 described below describes the procedure that each of the network nodes 4, or at least each of the battery modules 2, executes. When a network node 4 performs the enumeration method 7, it assumes a role referred to herein as the "first network node" 8, while all other network nodes 4 each assume a role as "second" network nodes 9 in relation to the first network node 8. More precisely, each network node 4, when considered as a whole, takes on a role both as the first network node 8 when it performs the enumeration method 7 and as the second network node 9 in relation to the other network nodes 4 when they each perform the enumeration method 7. Through the interaction of the network nodes 4 and their two roles, an enumeration of all network nodes 4 takes place. In Fig. 1, for the purpose of further explaining the enumeration method 7, one of the network nodes 4 is shown as an example as the first network node 8.

What has been said regarding the exemplary battery system 1 can also be applied to other communication networks based on a CAN bus, in which at least some, possibly all, network nodes 4 are not battery modules 2, but have other functionalities.

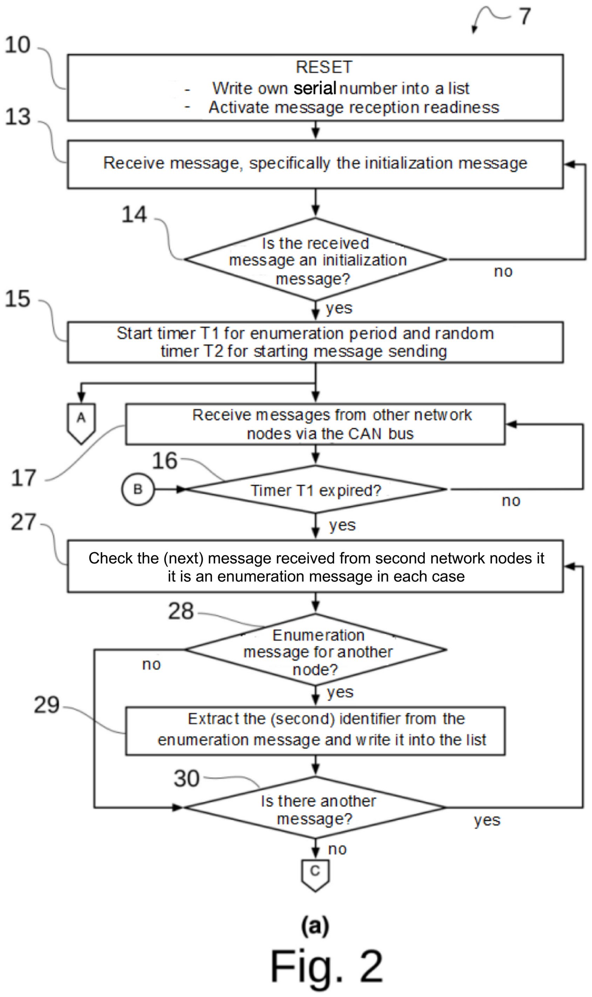

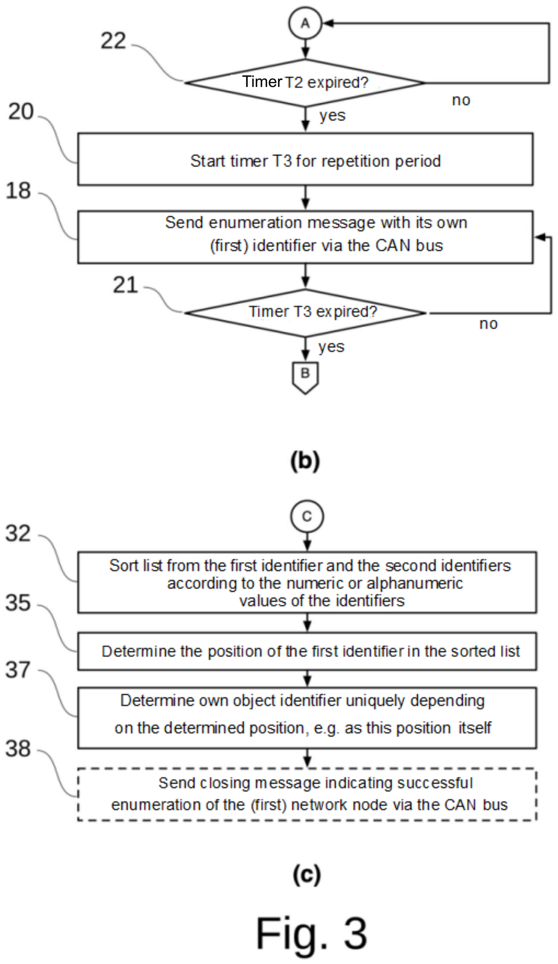

**Fig. 2****,** in combination with **Fig. 3****,** shows a flowchart consisting of three sections (a), (b), and (c) to illustrate an exemplary embodiment of the enumeration method 7. The enumeration method 7 is described below with exemplary reference to the battery system 1 from Fig. 1. It begins in section (a) of Fig. 2 with a reset 10, in which, in particular, the own serial number 11 of a first network node 8 executing the enumeration method 7 is written into a (empty) list 12 defining data structure and the message reception readiness of the first network node 8 is activated so that it can receive messages via the CAN bus.

If the bus controller 3 (or another network node 4) sends a message containing an enumeration call, and thus representing an initialization message for the enumeration, via the bus, in particular as a broadcast message to all network nodes 4, then this message is (also) received at the first network node 8 (receiving the initialization message 13) and checked to see if it is a message of type initialization message (initialization check 14). If the initialization check 14 returns the result that no initialization message is present, the system continues to wait for receiving such a message. Otherwise, a first timer T1 and a second timer T2 are started (timer start 15). The first timer T1 is set so that it expires after a predetermined first time interval, e.g. after 1 second (T1 expiry 16). During the first time period, the first network node 8 is in receive mode (receiving enumeration messages 17) until the T1 expiry 16, in order to receive any enumeration messages from the second network nodes 9 (i.e., other network nodes 4) via the CAN bus.

As shown in detail in section (b) of the flowchart in **Fig. 3****,** the first network node 8 sends its own enumeration message 18, which represents a predetermined serial number 11 uniquely and individually assigned to the first network node 8 as an identifier (first identifier 19), via the CAN bus to the other network nodes 4. As shown, this can be repeated, in particular within a repetition period defined by a further, third timer T3 (T3 start 20, T3 expiry 21). However, the first of these own enumeration messages 18 is only sent at or after the expiry of the second timer (T2 expiry 22). The time interval between the timer start 15 and the T2 expiry 22 can be determined randomly, for example by using a random number generator to set the timer setting. In this way, temporal decoupling can be achieved, so that the transmission times for the respective enumeration messages 18 of all network nodes 4 do not cluster in a very narrow time window, which could otherwise lead to reception problems, such as a receive buffer overflow, at the other network nodes 4. Section (b) returns to section (a) before or - as shown - after the method step "Receiving enumeration messages" 17.

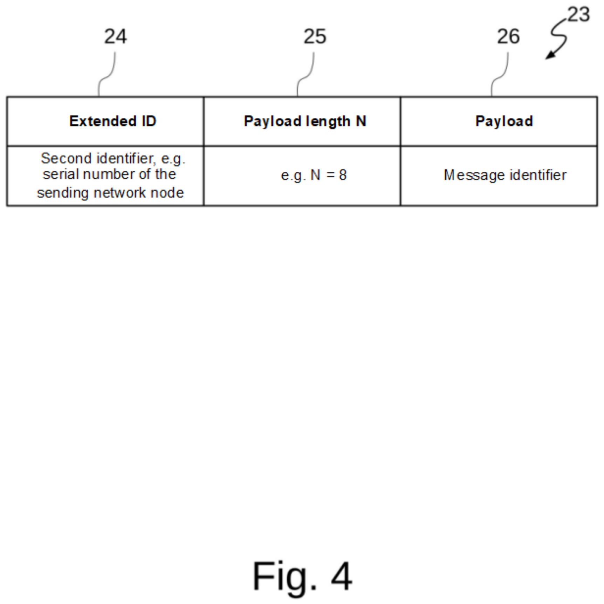

**Fig. 4** shows an exemplary embodiment for a format of an enumeration message defined by means of a frame structure 23. The frame structure 23 defines three data blocks. A first data block 24 serves to represent the identifier of the sending network node 4, such as its serial number. A second data block 25 determines the length of the third data block 26 (e.g. as the number N of bits or bytes), and the third data block 26 contains the actual payload of the frame. The third data block 26 can in particular be used to represent a predetermined message identifier as a payload, which can serve a receiving network node 4 to reliably recognize the message as a message of type enumeration message. The message identifier can be chosen arbitrarily, especially as a random value. However, it must be known to all network nodes 4, or made known to them, in order to serve as the basis for the aforementioned recognition.

Referring again to **Fig. 2****,** it is further defined that each message received by the second network node 9 up to the T1 expiry 16 is checked to see if it is an enumeration message (enumeration message check 27) and if it is an enumeration message from a second network node 9 from which no previous enumeration message has been successfully received in the time period defined by the first timer T1 (redundancy check 28). If this is the case, the (second) identifier of the sending second network node 9 is extracted from the enumeration message and entered into list 12 (list structure 29). After that (or in parallel), the other received messages are also checked accordingly until all have been processed (message check end 30).

The enumeration method 7 is then continued in its third section (c) according to **Fig. 3****,** in order to finally determine the network identifier of the first network node. For this purpose, the now complete list 12, which in the meantime contains not only the first identifier 19 but also all received second identifiers 31, is sorted 32 according to the values assigned to the identifiers, in particular numeric or alphanumeric values (sorting 32). If, for example, the identifiers are each specified as numerical values, then the list can be sorted 32 according to these numerical values in ascending or descending order to obtain a sorted list 33 from the original list 12. Then the position 34 of the first identifier 19 in the sorted list 33 is determined (position determination 35), and this position 34 itself or (alternatively) another identifier determined from position 34 by means of a one-to-one (bijective) mapping is determined as object identifier 36 of the first network node 8 (determination 37 of object identifier 36). Optionally, the first network node 8 can also communicate the successful completion of its enumeration via the CAN bus (completion message 38), specifically to the bus controller or as a broadcast.

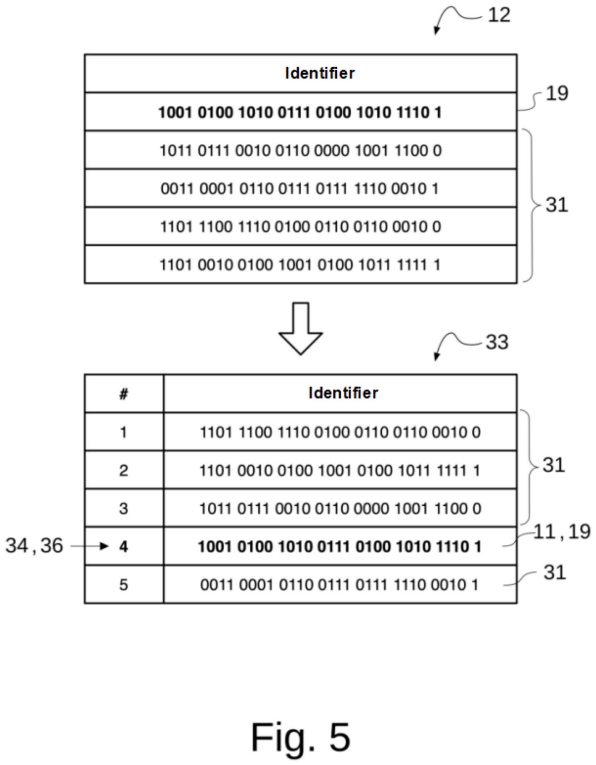

**Fig. 5** illustrates a simple example of the determination of the object identifier 36 according to section (c) of the enumeration method 7. Fig. 5 shows an exemplary list 12 generated by a first network node 8 with its own, i.e. first, identifier 19 and several second identifiers 31 received by means of enumeration messages, on the one hand before sorting 32 (top in Fig. 5) and as a sorted list 33 afterwards (bottom in Fig. 5), from which the position 34 of the first identifier 19 therein is determined as object identifier 36.

### LIST OF REFERENCE NUMERALS

- 1: battery system
- 2: battery module
- 3: bus controller
- 4: network node
- 5: battery cell
- 6: module management unit
- 7: enumeration method
- 8: first network node
- 9: second network node
- 10: reset
- 11: own serial number
- 12: list
- 13: receiving initialization message
- 14: initialization check
- 15: timer start
- 16: T1 expiry
- 17: receiving enumeration messages
- 18: own enumeration message
- 19: first identifier
- 20: T3 start
- 21: T3 expiry
- 22: T2 expiry
- 23: frame structure
- 24: first data block
- 25: second data block
- 26: third data block
- 27: enumeration message check
- 28: redundancy check
- 29: list structure
- 30: message check end
- 31: second identifiers
- 32: sorting
- 33: sorted list
- 34: position
- 35: position determination
- 36: object identifier
- 37: determination of object identifier
- 38: closing message
- G: ground wire
- H: CAN High line
- L: CAN Low line
- R: termination resistor
- T1: first timer
- T2: second timer
- T3: third timer

## Claims

1. An enumeration method (7) for automatically determining an object identifier (36) of a first network node (8) of a CAN bus having several network nodes (4), wherein the method is performed by the first network node (8) and includes:
receiving an initialization message containing an enumeration call via the CAN bus;
sending an enumeration message via the CAN bus in response to the initialization message, wherein the enumeration message specifies a first identifier (19) uniquely assigned to the first network node (8) among all network nodes (4) of the CAN bus;
receiving a respective enumeration message from at least one second network node (9) of the CAN bus, which specifies a respective second identifier (31) as an object identifier (36) bijectively assigned to the respective second network node (9) among all network nodes (4) of the CAN bus;
sorting (32) the set of identifiers, which contains the first identifier (19) and all second identifiers (31) received by the first network node (8) since receiving the initialization message, according to a predetermined sorting criterion to obtain an order of the identifiers in the set; and
determining an object identifier (36) of the first network node (8) in a one-to-one dependency on the position (34) of the first identifier (19) in the order.

2. The enumeration method (7) according to claim 1, wherein the first network node (8) repeatedly sends the enumeration message via the CAN bus in response to the received initialization message (13).

3. The enumeration method (7) according to any one of the preceding claims, wherein: the first network node (8) randomly determines a value of a delay variable; and
in response to the received initialization message (13), sends the enumeration message for the first time at or after the expiry of a time period determined by the value of the delay variable since receiving the initialization message via the CAN bus.

4. The enumeration method (7) according to any one of the preceding claims, wherein the network identifiers of the network nodes (4) represent numeric or alphanumeric values, and the sorting (32) of the set of object identifiers (36) according to the sorting criterion is performed such that the object identifiers (36) of the set are sorted (32) in ascending or descending order according to their numeric or alphanumeric values.

5. The enumeration method (7) according to any one of the preceding claims, wherein the or each enumeration message of the first network node (8) is generated such that its payload contains a predetermined message identifier which indicates that the enumeration message is an enumeration message.

6. The enumeration method (7) according to claim 5, wherein
each enumeration message from a second network node (9) received by the first network node (8) is checked by the first network node (8) to see whether it contains the predetermined message identifier in its payload; and
a second identifier (31) that may be contained in the respective received enumeration message will only be used to determine the object identifier (36) of the first network node (8) if a match is found during the verification process.

7. The enumeration method (7) according to any one of the preceding claims, wherein the first network identifier is encoded in 29 bits and each enumeration message is formatted in the extended CAN format according to the CAN bus protocol and sent via the CAN bus.

8. The enumeration method (7) according to claim 7, wherein each received enumeration message (17) from a second network node (9) is read according to the extended CAN format according to the CAN bus protocol 2.0 in order to extract the associated second object identifier (36).

9. The enumeration method (7) according to any one of the preceding claims, wherein the reception of enumeration messages from second network nodes (9) is limited to a predetermined period from receiving the initialization message.

10. The enumeration method (7) according to any one of the preceding claims, wherein the enumeration method (7) is carried out with respect to a first network node (8) and second network nodes (9), each having a battery module (2).

11. A network node (4) that is configured as a network node (4) for a CAN bus and that has:
a communication interface for sending and receiving messages via the CAN bus; and
a data processing device configured to perform the enumeration method (7) according to any one of the preceding claims.

12. The network node (4) according to claim 11, wherein the network node (4) comprises a battery module (2).

13. A communication network, having:
a CAN bus and a plurality of network nodes (4) connected thereto via their respective communication interfaces according to claim 11 or 12, wherein the respective data processing device of each of the network nodes (4) is configured to perform the enumeration method (7) according to any one of claims 1 to 10.

14. The communication network according to claim 13, further including a network control unit configured to send the initialization message as a broadcast message via the CAN bus to all network nodes (4) connected thereto.
